Europäisches Patentamt

European Patent Office

Office européen des brevets

(11) Publication number: **0 313 314**
**A2**

## (12) EUROPEAN PATENT APPLICATION

(21) Application number: 88309757.8

(22) Date of filing: 18.10.88

(51) Int. Cl.4: **C08F 214/08 , C09D 3/74 ,**
**C09D 5/08**

(30) Priority: 19.10.87 JP 261629/87

(43) Date of publication of application:
**26.04.89 Bulletin 89/17**

(84) Designated Contracting States:
**BE DE FR GB**

(71) Applicant: **KUREHA KAGAKU KOGYO**
**KABUSHIKI KAISHA**
**1-9-11, Nihonbashi, Horidome-cho**
**Chuo-ku Tokyo 103(JP)**

(72) Inventor: **Suzuki, Masayasu**
**43-6 Yanagi-machi Ushiroda-machi**
**Iwaki-shi Fukushima-ken(JP)**
Inventor: **Adachi, Yoshiaki**
**38-10 Shiroyone-Sakaihara Nakoso-machi**
**Iwaki-shi Fukushima-ken(JP)**
Inventor: **Kobori, Masaki**
**58 Yoko-machi Ueda-machi**
**Iwaki-shi Fukushima-ken(JP)**

(74) Representative: **Woods, Geoffrey Corlett et al**
**J.A. KEMP & CO. 14 South Square Gray's Inn**
**London WC1R 5EU(GB)**

(54) **Anticorrosive paint composition.**

(57) An anticorrosive paint composition comprising 100 parts by weight, calculated as solids material, of a vinylidene chloride copolymer latex and from 0.1 to 10 parts by weight of a chelating agent;

the vinylidene chloride copolymer latex being obtained by subjecting 100 parts by weight of a monomeric mixture comprising from 50 to 95 % by weight of vinylidene chloride and from 5 to 50 % by weight of a monomer which is copolymerizable therewith to emulsion polymerization in the presence of a polymerization initiator and from 0.5 to 2.0 parts by weight of a nonionic emulsifier;

wherein a preliminary emulsion polymerization is carried out with less than 20 % by weight of the total weight of the monomeric mixture, not more than 25 % by weight of the nonionic emulsifier and a proportion of the polymerization initiator, and the remaining monomeric mixture, nonionic emulsifier and polymerization initiator are subsequently continuously and uniformly added to the polymerization system to carry out emulsion polymerization of the monomeric mixture;

the vinylidene chloride copolymer latex containing the nonionic emulsifier in a form which is not extractable by the methanol extraction method (as herein defined) in an amount of at least 50 % by weight of the total amount of the nonionic emulsifier used in the polymerization and in an amount of at least 0.25 % by weight of the solids content of the vinylidene chloride copolymer latex.

## ANTICORROSIVE PAINT COMPOSITION

The present invention relates to an anticorrosive paint composition, suitable for application to metal surfaces, such as iron or iron alloy surfaces, for preventing the occurrence of rust, and to a process for its preparation.

In general, in order to prevent the occurrence of rust on iron and alloys thereof, various methods such as the application of anticorrosive paint, a plating treatment and an electric anticorrosive treatment are known. In particular, to prevent the occurrence of rust on large metal products and metal structural materials, for instance rolling stock, ships, bridges and tanks, the anticorrosive paint method has been widely adopted due to its simplicity of use and for economic reasons.

However, known anticorrosive paints are not entirely satisfactory; their anticorrosive effect depends on the state of the surface of the object to be painted. For instance it is not possible always to prevent the occurrence of rust on a surface due to unevenness or roughness of the surface or the presence of other material on the surface or due to the paint itself not having satisfactory properties.

Known anticorrosive paints for iron or its alloys, for instance those containing tannin or tannic acid, are described in GB-A-2075538, JP-A-57-139155 and JP-A-58-149966. However, these paints do not have satisfactory anticorrosive performance.

We have found that an anticorrosive paint with excellent anticorrosive performance desirably has the following specific properties:

(1) It cleans the surface of the object to be painted, for instance it dissolves the rust on the surface of the object;

(2) It does not coagulate chemically on the surface of the object to be painted, and thus an applied membrane of the paint is smooth and strongly adheres to the surface;

(3) A membrane of the paint has excellent barrier properties against moisture and oxygen; and

(4) It combines with the surface of the metal of the object to be painted to form a so-called "passive state".

No known anticorrosive paint has all these properties. An anticorrosive paint composition comprising a vinylidene chloride copolymer latex and a tannin substance has been proposed in JP-A-63-105072 and JP-A-63-105073.

However, this paint is unstable with respect to metal ions since the vinylidene chloride copolymer latex is produced by emulsion polymerization in the presence of an anionic emulsifier and therefore has anionic properties. Accordingly, when the type or state of the object to be painted or the painting conditions are not suitable, a thin membrane of vinylidene chloride copolymer which prevents moisture or oxygen from passing is not formed. As a result a stabilized anticorrosive effect is not exhibited. When an anticorrosive paint comprising a vinylidene chloride copolymer latex stabilized by an anionic emulsifier is applied to an iron plate with red rust or to a zinc-plated steel plate, coagulation of the latex occurs due to metal ions which dissolve from the surface of the object to be painted, and a membrane consequently does not form. This is a fatal defect for the repair or anticorrosive painting of rolling stock in which various metals are used.

In order to improve tlhe paint it is necessary to improve the stability of the vinylidene chloride copolymer latex to metal ions. In order to obtain a vinylidene chloride copolymer latex with high chemical stability, it is generally effective to use a nonionic emulsifier, and it is possible to improve the chemical stability of a vinylidene chloride copolymer latex by adding a nonionic emulsifier to it. However, in order to obtain a sufficiently high chemical stability, it is necessary to use a large amount of nonionic emulsifier, and a membrane of vinylidene chloride copolymer latex formed therefrom has very poor barrier properties against oxygen and water due to the plasticizing action of the nonionic emulsifier.

Moreover, in an anticorrosive paint composition, the addition of a chelating agent is extremely effective. However a vinylidene chloride copolymer latex containing a nonionic emulsifier generally coagulates and gelates when a chelating agent such as tannic acid is added thereto. Accordingly it has not been possible to obtain a suitable anticorrosive paint containing a vinylidene chloride copolymer latex stabilized by a nonionic emulsifier.

JP-A-57-18766 has proposed the use of a latex which is not obtained with a nonionic emulsifier and in which acid radicals are covalently bonded to the polymer molecule. However its stability to metal ions is not at all improved.

The present invention provides an anticorrosive paint composition comprising 100 parts by weight, calculated as solids material, of a vinylidene chloride copolymer latex and from 0.1 to 10 parts by weight of a chelating agent;

the vinylidene chloride copolymer latex being obtained by subjecting 100 parts by weight of a monomeric mixture comprising from 50 to 95 % by weight of vinylidene chloride and from 5 to 50 % by weight of a monomer which is copolymerizable therewith to emulsion polymerization in the presence of a polymerization initiator and from 0.5 to 2.0 parts by weight of a nonionic emulsifier;

wherein a preliminary emulsion polymerization is carried out with less than 20 % by weight of the total weight of the monomeric mixture, not more than 25 % by weight of the nonionic emulsifier and a proportion of the polymerization initiator, and the remaining monomeric mixture, nonionic emulsifier and polymerization initiator are subsequently continuously and uniformly added to the polymerization system to carry out emulsion polymerization of the monomeric mixture;

the vinylidene chloride copolymer latex containing the nonionic emulsifier in a form which is not extractable by the methanol extraction method (as herein defined) in an amount of at least 50 % by weight of the total amount of the nonionic emulsifier used in the polymerization and in an amount of at least 0.25 % by weight of the solids content of the vinylidene chloride copolymer latex.

The copolymer latex has a sufficiently good chemical stability, is not coagulated by a chelating agent and is stable to the latex-coagulating action of metal ions.

In the present invention, a specified latex of vinylidene chloride copolymer which is obtained by emulsion polymerization in the presence of a specified emulsifier is used as the vehicle. Namely, the specified latex of vinylidene chloride copolymer is obtained by subjecting a monomeric mixture of vinylidene chloride and a monomer copolymerizable with vinylidene chloride in a specified ratio to emulsion polymerization in the presence of 0.5 to 2.0 parts by weight of the nonionic emulsifier to 100 parts by weight of said monomeric mixture, and a part of the thus used nonionic emulsifier remains in the copolymer latex in the non-extractable state by the methanol extraction method in an amount of not less than 50 % by weight of the amount of the thus used nonionic emulsifier and in an amount of not less than 0.25 % by weight of the solid material of the copolymer latex.

The amount of the nonionic emulsifier in the latex, which is not extracted by the methanol extraction method, herein mentioned, is the value obtained as follows.

Namely, a film, which is obtained by applying the copolymer latex on a base film so that the thickness of the solid material becomes 5 micrometers, making a membrane at 20°C and drying the thus obtained membrane, is extracted by using methanol as the solvent while using a Soxhlet's extractor until the amount of the nonionic emulsifier extracted by methanol becomes constant in weight.

The amount obtained by deducting the amount of the thus extracted nonionic emulsifier from the amount of the thus used nonionic emulsifier is the amount of the non-ionic emulsifier remaining in the latex.

The above-mentioned latex of vinylidene chloride copolymer can be produced by the following method (refer to EP 0242234 A):

(1) 100 parts by weight of a monomeric mixture consisting of 50 to 95 % by weight of vinylidene chloride and 5 to 50 % by weight of more than one kind of monomers which are copolymerizable with vinylidene chloride, (2) 0.5 to 2.0 parts by weight of a nonionic emulsifier and (3) a necessary amount of a polymerization initiator are arranged.

In the above-mentioned monomeric mixture, the rate of vinylidene chloride is made to be 50 to 95 % by weight, preferably 60 to 93 % by weight and most favorably 70 to 90 % by weight. In the case where the rate is below 50 % by weight, the thus obtained latex is higher than pH3 and becomes weak in acidity. Accordingly, the cleaning action of the paint to the surface of the object to be painted is reduced and at the same time, the adherence of the paint membrane to the surface of the object to be painted becomes poor.

In the case where the above-mentioned rate of vinylidene chloride is more than 70 % by weight, since the barrier property of the paint membrane to water and oxygen becomes sufficient, such a situation is particularly desirable. On the other hand, in the case where the above-mentioned rate goes over 95 % by weight, the thus obtained vinylidene chloride copolymer crystallizes easily, and the latex particles harden within a short time period after production of the copolymer latex resulting in the insufficient formation of the membrane of the copolymer.

As the monomer copolymerizable with vinylidene chloride, one or more than one of the monomers of vinyl series or vinylidene series selected from the group consisting of vinyl chloride, methyl acrylate, ethyl acrylate, propyl acrylate, butyl acrylate, 2-ethylhexyl acrylate, octyl acrylate, methyl methacrylate, acrylonitrile, vinyl acetate, glycidyl acrylate, glycidyl methacrylate, acrylic acid, methacrylic acid, itaconic acid, 2-hydroxyethyl methacrylate and others is (are) used. The rate of the above-mentioned copolymerizable monomer is made to be 5 to 50 % by weight, preferably 7 to 40 % by weight and most favorably 10 to 30 % by weight of the monomeric mixture. In the case where glycidyl acrylate or glycidyl methacrylate, which has the cross-linking property, is used as a part of the above-mentioned monomer, it is possible to obtain a paint membrance excellent in toughness, and it is favorable to particularly use glycidyl methacrylate in an amount of 0.5 to 5 % by weight of the total amount of the monomer.

As the emulsifier for use in emulsion polymerization, a nonionic emulsifier is used.

Although the nonionic emulsifier is used in the range of 0.5 to 2.0 parts by weight, preferably 1.0 to 2.0 parts by weight to 100 parts by weight of the monomeric mixture, it is desirable that the amount of the nonionic emulsifier is as small as possible in the range of retaining the stability of the copolymer latex.

On the other hand, in the case where the abovementioned rate is over 2.0 parts by weight, there is a tendency of deteriorating the barrier property of the thus obtained copolymer to oxygen and water.

As the nonionic emulsifier, for instance, polyoxyethylene alkyl ether, polyoxyethylene alkyl phenyl ether, fatty acid esters of polyoxyethylene, fatty acid esters of polyoxyethylene sorbitan, etc. may be used, and those having the value of HLB in the range of 7 to 20 are favorable. Particularly, polyoxyethylene alkyl ether and polyoxyethylene alkyl phenyl ether and favorable.

In the next place, as the polymerization initiator, water-soluble inorganic peroxides and organic peroxides, which are soluble in water even in a small amount, can be used, and according to circumstance, they can be used as a component of the redox initiator which is formed by combining the initiator with a reductant. As the inorganic peroxide, potassium persulfate, sodium persulfate, ammonium persulfate, hydrogen peroxide, etc. can be used. As the organic peroxide, t-butyl hydroperoxide, succinic peroxide, t-butylperoxymaleic acid, cumene hydroperoxide, etc. can be used. Moreover, a water-soluble azo-compound, for instance, 2,2´-azobis (2-amidinopropane)hydrochloride, etc. can be used.

As the reductant to be combined with the abovementioned peroxide, sodium hydrogen sulfite, rongalite salts, oxalic acid, maleic acid, paraoxybenzoic acid, thiourea or ascorbic acid, etc. are used.

Although the amount of the polymerization initiator used in the polymerization depends on the molecular weight of the copolymer of the object, generally 0.02 to 0.2 part by weight to 100 parts by weight of the monomeric mixture is favorable.

Moreover, it is necessary that the polymerization initiator is continuously added without fail during the time period when the monomeric mixture is continuously added to the system of polymerization.

In the next place, the method of emulsion polymerization in the present invention will be explained in detail as follows.

The emulsion polymerization is carried out at first as the preliminary emulsion polymerization wherein a part of the monomeric mixture, a part of the nonionic emulsifier and a part of the polymerization initiator are introduced into an autoclave and the thus introduced monomeric mixture is polymerized to some extent in the former stage of polymeri zation, and then the emulsion polymerization in the latter stage is carried out by the means of adding the remaining monomeric mixture, the remaining nonionic emulsifier and the remaining polymerization initiator continuously to the autoclave at a uniform speed.

In the above-mentioned case, it is favorable that the emulsifier and the polymerization initiator are added in a state of an aqueous solution.

In the case of adopting the above-mentioned means, the so-called seed-polymerization is performed in the former stage of polymerization, and accordingly, the above-mentioned means is favorable in the point of making the control of the diameter of the latex particles easy because the number of the latex particles becomes constant.

The amount of the monomeric mixture used in the former stage of polymerization is less than 20 % by weight and preferably 5 to 15 % by weight of 100 parts by weight of the total monomeric mixture, the amount of the emulsifier used in the former stage of polymerization is not more than 25 % by weight and preferably 10 to 25 % by weight of 0.5 to 2.0 parts by weight of the total emulsifier and the necessary amount, preferably 20 - 45 % by weight of the polymerization initiator is used.

Namely, in the latter stage of polymerization, it is necessary that not more than 80 % by weight of the monomeric mixture is continuously added to the reaction system of emulsion polymerization at a uniform speed and that not less than 75 % by weight of the emulsifier and the polymerization initiator are continuously added to the system at the same time during the time period of continuously adding the above-mentioned monomeric mixture.

In each of the above-mentioned means, the composition or the kinds of the monomeric mixture and the nonionic emulsifier which are continuously added to the polymerization system may be the same at all times or different. Moreover, the composition and the kinds of the monomeric mixture and the composition and the kind of the nonionic emulsifier which are used in the former stage of polymerization may be the same as the composition and the kind of the materials continuously added in the latter stage or different.

By the above-mentioned method of emulsion polymerization, a latex of vinylidene chloride copolymer in which the nonionic emulsifier remains in a state of not being extracted by the methanol extraction method and of which the rate of the remaining nonionic emulsifier is not less than 50 % by weight of the thus used nonionic emulsifier and is not less than 0.25 % by weight, preferably not less than 0.5 % by weight of the solid material of the copolymer latex can be produced.

In the present invention, as the diameter of particles of the latex of vinylidene chloride copolymer, the range of 800 to 2000 Å is most suitable, and the particles having such a diameter can be easily obtained by suitably adjusting the amount of the monomeric mixture, the emulsifier and the polymerization initiator used in the former stage of polymerization.

The temperature of the emulsion polymerization is preferably 30 - 60 °C.

The yield of polymerization in the emulsion polymerization of the above-mentioned monomeric mixture is nearly 100 % and accordingly, the composition of the thus obtained copolymer becomes nearly the same as the composition of the monomeric mixture.

By combining 0.1 to 10 parts, preferably 0.5 to 5 parts by weight of the chelating agent with 100 parts by weight (in solid material conversion) of the thus obtained latex of vinylidene chloride copolymer which shows pH of 1.5 to 3.0, directly, namely without carrying out pH adjustment, the anticorrosive paint composition according to the present invention is obtained. To the thus obtained anticorrosive paint composition, other additives may be further added as occasion demands.

The chelating agent used in the present invention is a substance which dissolves in water showing pH of 1 to 4 and is able to form a water-insoluble chelate with a metal, and as the concrete example thereof, gallic acid, pyrogallol, tannin, tannic acid and the like may be exemplified. Of these substances, particularly pyrogallol and tannic acid are favorable.

Tannic acid, herein mentioned, is a hydrolyzable tannin and is represented by gallotannin gallotannic acid or nutgalls tannin. These chelating agents may be used singly and may be used in combination.

The chelating agent is combined with the above-mentioned latex of vinylidene chloride copolymer, as it is or in a state of an aqueous solution.

In the case where the rate of the thus combined chelating agent is less than 0.1 part by weight, since the formation of the chelate is not performed sufficiently, it is impossible to obtain a favorable anticorrosive effect. On the other hand, in the case where the above-mentioned rate is more than 10 parts by weight, the water-proofness of the thus formed paint membrane is lowered and at the same time, it is unprofitable economically.

It is favorable to combine an alcohol with the anticorrosive paint composition according to the present invention in order to improve the properties of the composition as a paint.

The rate of combination of the alcohol is 1.0 to 100 parts, preferably 5 to 50 parts by weight to 100 parts by weight (calculated as solid material) of the latex of vinylidene chloride copolymer.

As the alcohol, methanol, ethanol, isopropyl alcohol, butanol, ethylene glycol, propylene glycol and the like may be suitably used. By combining the alcohol with the paint composition, the extremely excellent practical effects are obtained as follows:

Namely, the leveling property of the paint is improved, the antifoaming effect is obtained and the degasing effect of hydrogen gas, which will be formed in the reaction with the metal at the time of applying the anticorrosive paint composition, is obtained.

Moreover, as the additive which can be added to the anticorrosive paint composition according to the present invention, for instance, film-forming adjuvants comprising a carbitol for improving the film-forming property at a low temperature of 0 to 10 °C, plasticizers, viscosity-increasing agents, pigments, silica, clay, dispersing agents comprising various surfactants, wetting agents and others may be mentioned.

The anticorrosive paint composition according to the present invention is used as the paint or the primer which is applied on a metal, particularly iron or its alloy. At the time when this anticorrosive paint composition is applied on the surface of the object to be painted, since the chelating agent combines with the metal of the object, particularly iron to form a chemically stable chelate, i.e., the substance in passive state and the vehicle comprises the specified latex of vinylidene chloride copolymer, the thus formed paint membrane has an extremely excellent barrier property, and at the same time, since the above-mentioned latex of vinylidene chloride copolymer is acidic for hydrochloric acid, its excellent cleaning action is exhibited to the surface of the object to be painted. Namely, an excellent adherence of the paint composition to the surface of the object to be painted is obtained from the just-mentioned point.

The latex of vinylidene chloride copolymer used in the present invention is obtained by of subjecting a monomeric mixture of vinylidene chloride to a specific emulsion polymerization in the presence of a nonionic emulsifier in the specific rate of 0.5 to 2.0 parts by weight to 100 parts by weight of the monomeric mixture, and the copolymer latex contains the remnant nonionic emulsifier in an amount of not less than 50% by weight of the thus used nonionic emulsifier and in amount of not less than 0.25 % by weight to the solid material of the copolymer latex. Accordingly, the above-mentioned latex of vinylidene chloride copolymer has an extremely excellent chemical stability as compared to the conventional latex obtained by using a nonionic emulsifier, and moreover, it is possible to stably combine the chelating agent with the latex of vinylidene chloride copolymer according to the present invention.

The above-mentioned matters are quite surprising when it is considered that the latex of vinylidene chloride copolymer,to which a nonionic emulsifier is added, has usually been coagulated by the combination of a chelating agent such as tannic acid, etc.

Namely, according to the present invention, the chelating agent can be combined even with the latex of vinylidene chloride copolymer, to which a chemical stability has been given by a nonionic emulsifier, without causing coagulation. Such a combination of the chelating agent has been considered impossible so far.

Although the elucidation of the reason of causing the above-mentioned phenomenon would be done by the research in future, it is considered that the thus used nonionic emulsifier remains, at the not-extractable state by methanol, in the copolymer forming the latex particle, and that in the case where the rate of the remnant emulsifier is not less than 50 % by weight of the thus used nonionic emulsifier and not less than 0.25 % by weight to the solid material of the copolymer latex, the combination of the chelating agent of not more than 10 parts by weight to 100 parts by weight of the copolymer latex does not disturb the stability of the copolymer latex.

Namely, it is considered that due to the peculiar shape of existence taken by such a nonionic emulsifier, the chemical stability of the copolymer latex itself becomes excellent, and at the same time, the chelating agent is stably combined even in the case where an amount of the nonionic emulsifier necessary for emulsion polymerization is used. Moreover, the necessary amount of the nonionic emulsifier is as small as less than 2.0 parts by weight to 100 parts by weight of the monomeric mixture, and from this point, a membrane excellent in barrier property to oxygen and water can be formed.

Moreover, since the latex of vinylidene chloride copolymer used in the present invention is obtained without using any anionic emulsifier, the copolymer latex is also stable to metal ions, and accordingly, in the case where the copolymer latex is applied on the surface of the object to be painted, the copolymer latex is not coagulated by iron ions formed by dissolution.

In the case of using the anticorrosive paint composition according to the present invention, it is possible to obtain a beautiful painted membrane which has the above-mentioned large adherence and is compact and high in barrier property as mentioned above, and as a result of these properties, it is possible to obtain an extremely excellent anticorrosive effect.

Moreover, by combining a suitable amount of an alcohol with the above-mentioned paint composition, the handling and the use of the anticorrosive paint composition becomes easier as a paint. Namely, the anticorrosive paint composition becomes very convenient in practical uses.

The present invention will be explained more in detail while referring to Examples as follows, however, the present invention is not limited to Examples. "Part" in Examples means part by weight.

EXAMPLE 1:

(1) Preparation of Vinylidene chloride copolymer Latex A

The former stage:

Into a glass-lined autoclave provided with. a stirrer, 100 parts of de-ionized water and 0.1 part of polyoxyethylene lauryl ether (made by KAO-ATLAS Co., Ltd., under the commercial name of [EMULGEN 147]) were introduced, and after raising the temperature of the thus introduced substances to 45° C of the polymerization temperature and substituting the air in the autoclave sufficiently with nitrogen gas, 9 parts of vinylidene chloride and one part of methyl acrylate were introduced into the autoclave under a pressure, and then an aqueous solution of 0.01 part of potassium persulfate and an aqueous solution of 0.01 part of sodium hydrogen sulfite were introduced into the autoclave under a pressure. The content of the autoclave was stirred for 5 hours to carry out emulsion polymerization, thereby preparing a latex.

The latter stage:

To the latex obtained in the former stage in the autoclave, 6.0 parts of an aqueous 1 % solution of

EP 0 313 314 A2

sodium hydrogen sulfite were added and in the next place, a mixture of 65 parts of vinylidene chloride, 21 parts of butyl acrylate and 4 parts of glycidyl methacrylate was continuously introduced into the autoclave at a uniform speed of 5 parts per hour. At the same time, a mixture of 0.9 part of polyoxyethylene lauryl ether [EMULGEN 147], 0.01 part of potassium persulfate and 18.0 parts of de-ionized water was continuously introduced into the autoclave at a uniform speed of one part per hour to carry out polymerization at 45°C.

After about one hour of completing the addition of the monomeric mixture, the addition of the emulsifier and the polymerization initiator was over. After one hour of the ending of the addition of the emulsifier and the polymerization initiator, a mixture of 0.02 part of potassium persulfate, 0.02 part of sodium hydrogen sulfite and 4.0 parts of de-ionized water was added collectively, and the content of the autoclave was stirred further for 3 hours at 45°C to obtain the Latex A of pH of 2.3.

At the time when one to two drops of the thus obtained Latex A were dropped into methanol, an aqueous 10 % solution of a cationic surfactant (made by LION-AKZO Co., under the commercial name of [ETHOQUAD C-12]) and an aqueous 5 % solution of FeCl₃, the thus treated Latex A did not coagulate and it was observed that the chemical stability of Latex A was extremely good.

Furthermore, Latex A was applied on a biaxially stretched polypropylene film so that the thickness of the solid material became 5 micrometers, the thus treated film was dried at 20°C to form a membrane of the copolymer and after drying, only the thus formed painted membrane was peeled off from the film by using a cellophane adhesive tape. After cutting the painted membrane amounting to about 10 g into pieces of a long strip shape, the thus obtained pieces were extracted by methanol as the solvent until the amount of the emulsifier extracted becomes constant in weight, while using a Soxhlet's extractor.

The amount of the thus extracted emulsifier by the methanol extraction method was 0.2 part corresponding to 20 % by weight of the total amount of the thus used emulsifier (1.0 part).

The amount of the nonionic emulsifier remaining in Latex A was 0.8 part, and the rate of remaining of the emulsifier was about 0.8 % by weight to the solid material of Latex A.

(2) Combination

To 100 parts (calculated as solid material) of Latex A, an aqueous solution of 5 parts of tannic acid and 5 parts of isopropyl alcohol was added, and the thus prepared mixture was gently stirred to produce the anticorrosive paint composition 1 according, to the present invention.

(3) Evaluation of the anticorrosive paint composition

Onto an iron plate of 7 cm in width, 15 cm in length and 1 mm in thickness which had been preliminarily subjected to de-fatting by perchloroethylene and had been left for one week in a room to slightly generate the red rust and also onto a zinc-plated steel plate of the same size as above, the anticorrosive paint composition 1 was applied by a brush, and the thus treated plates were dried at 20°C. After drying the plates, the application of the anticorrosive paint composition and the drying thereof were repeated once to form a paint membrane of 40 micrometers in thickness.

In the case where the application of the paint composition was carried out on the iron plate, although the paint composition turned to milk white colour just after application, it changed into black at the same time of the formation of the paint membrane. Namely, a smooth and lustrous black paint membrane was formed. The above-mentioned facts are considered to be a result of the following phenomena: Namely, tannic acid immediately bonded to the new surface of the iron plate which was dissolved by the acidity of the above-mentioned paint composition and exposed to form a chelate rapidly. On the other hand, in the case of the zinc-plated steel plate, a smooth, lustrous and transparent membrane was formed, and the painting property and the formation of the membrane were good.

In the case where the thus painted iron plate and the thus painted zinc-plated steel plate were subjected to the test of water-proofness prescribed in Japanese Industrial Standards (JIS) K 5400 7.2, the painted plate being soaked in water at 40°C for 48 hours, and were also subjected to the test of saline-proofness prescribed in Japanese Industrial Standards (JIS) K 5400 7.6, the painted plate being soaked in saline at 20°C for 96 hours, no abnormality of the thus soaked plate was found in each of the tests, and the anticorrosive effect of the anticorrosive paint composition 1 of the present invention was satisfactory. Furthermore, in the case where the thus painted plates were soaked in saline for 800 hours, any occurrence of rust was not observed at all.

7

EXAMPLE 2:

To 100 parts (calculated as solid material) of Latex A obtained in Example 1, an aqueous solution of 3 parts of pyrogallol, an aqueous solution of 5 parts of isopropyl alcohol and an aqueous solution of 0.3 part of polyvinyl alcohol (made by NIHON GOSEI Co., Ltd., under the commercial name of [AH-17]) were added in the above-mentioned order. The thus prepared mixture was gently stirred to produce the anticorrosive paint composition 2 according to the present invention.

In the same manner as in Example 1, the anticorrosive paint composition 2 was applied on an iron plate to obtain a lustrous black painted membrane.

In the case where the test of water-proofness and the test of saline-proofness were carried out on the thus painted iron plate in the same manner as in Example 1, any abnormality was not observed at all.

Since the viscosity of the anticorrosive paint composition 2 was moderate, the adhered amount of the composition obtained by a single application was large, and since the paint composition contained alcohol, the extinction of foam was easy and the handling of the paint composition 2 was also easy.

EXAMPLE 3:

(1) Preparation of Vinylidene chloride Latex B

The former stage

Into a glass-lined autoclave provided with a stirrer, 80 parts of de-ionized water and 0.5 part of polyoxyethylene nonyl phenyl ether (made by KAO-ATLAS Co., Ltd., under the commercial name of [EMULGEN 935]) were introduced, and after raising the temperature of the thus introduced substances to 45°C of the polymerization temperature and substituting the air in the autoclave sufficiently with nitrogen gas, 8 parts of vinylidene chloride and 2 parts of ethyl acrylate were introduced into the autoclave under a pressure, and then an aqueous solution of 0.01 part of potassium persulfate and an aqueous solution of 0.01 part of sodium hydrogen sulfite were introduced into the autoclave under a pressure. The content of the autoclave was stirred for 3 hours to carry out emulsion polymerization, thereby preparing a latex.

The latter stage

To the latex obtained in the former stage in the autoclave, 6.0 parts of an aqueous 1 % solution of sodium hydrogen sulfite were added and in the next place, a mixture of 72 parts of vinylidene chloride, 14 parts of ethyl acrylate and 4 parts of glycidyl methacrylate was continuously introduced into the autoclave at a uniform speed of 5 parts per hour.

At the same time, a mixture of 1.5 parts of polyoxyethylene nonyl phenyl ether [EMULGEN 935], 0.004 part of potassium persulfate and 18 parts of de-ionized water was continuously introduced into the autoclave at a uniform speed of one part per hour to carry out polymerization at 45°C. After about one hour of completing the addition of the monomeric mixture, the addition of the emulsifier and the polymerization initiator was over. After one hour of the ending of the addition of the emulsifier and the polymerization initiator, a mixture of 0.02 part of potassium persulfate, 0.02 part of sodium hydrogen sulfite and 4.0 parts of deionized water was added collectively, and the content of the autoclave was stirred further for 3 hours at 45°C to obtain the Latex of pH of 2.5.

At the time when one to two drops of the thus obtained Latex B were dropped into methanol, the aqueous solution of the cationic surfactant and the aqueous solution of iron chloride in the same manner as in Example 1, the thus treated Latex B did not coagulate and it was observed that the chemical stability of Latex B was extremely good.

The amount of the emulsifier extracted from Latex B by the methanol extraction method was 0.4 part corresponding to 20 % by weight of the total amount of the thus used emulsifier (2.0 parts).

Accordingly, the rate of remaining of the nonion emulsifier contained in Latex B becomes about 1.6 % by weight to the solid material of Latex B.

To 100 parts (in solid material conversion) of Latex B, an aqueous solution of 2 parts of tannic acid was added, and the thus prepared mixture was gently stirred to produce the anticorrosive paint composition 3 according to the present invention.

Onto a cast iron plate of 7 cm in width, 15 cm in length and 1 cm in thickness, the anticorrosive paint composition 3 was applied by a brush, and the thus treated plate was dried at 20° C. After drying the plate, the application of the anticorrosive paint composition 3 and the drying thereof were repeated once to form a paint membrane of about 40 micrometers in thickness. Although the paint composition turned to milk white colour just after application, it changed into black simultaneously with the formation of the paint membrane. Namely, a black lustrous paint membrane was formed.

In the case where the thus treated cast iron plate was subjected to the water-proofness test and the saline-proofness test similar to those in Example 1, no abnormality was observed on the thus tested cast iron plate.

COMPARATIVE EXAMPLE 1:

In the same manner as in Example 1 except for changing the monomers in each stage into those shown in the following, the comparable latex a, which did not contain vinylidene chloride as the component, was produced.

### Monomers in the former stage

| | |
|---|---|
| Styrene | 2.0 parts |
| Methyl methacrylate | 3.0 parts and |
| Butyl acrylate | 5.0 parts |

### Monomers in the latter stage

| | |
|---|---|
| Styrene | 18 parts |
| Methyl methacrylate | 22.5 parts |
| Butyl acrylate | 45 parts |
| Glycidyl methacrylate | 3.5 parts and |
| Methacrylic acid | 1.0 part |

The pH value of the above-mentioned comparable latex a was 4.

In the same manner as in Example 1 except for using the above-mentioned comparative latex a, the comparative paint composition 1 was produced by combining 5 parts of tannic acid and 5 parts of isopropyl alcohol therewith.

In the same manner as in Example 1 except for using the above-mentioned comparative paint composition 1, the paint composition was applied on an iron plate to obtain a black lustrous painted membrane, which had the same appearance as that in Example 1.

However, when the thus treated iron plate was subjected to the same water-proofness test and the same saline-proofness test as in Example 1, red rusts grew and enlarged on the whole surface of the iron plate.

COMPARATIVE EXAMPLE 2:

In the same manner as in Example 1 except for changing the emulsifiers of the latter stage into those shown in the following, the comparative latex b containing both the nonionic emulsifier and the anionic emulsifier was produced.

## Emulsifier in the latter stage

Sodium alkyl diphenyl ether disulfonate (made by NIHON NYUKAZAI Co., Ltd., under the commercial name of [NEWCOL 271A] 0,45 part

In the case where the thus produced comparative latex b was added to methanol, an aqueous solution of a cationic emulsifier and an aqueous solution of iron chloride, the thus added latex b coagulated immediately. Namely, the comparative latex b was poor in chemical stability.

The comparative paint composition 2 was produced by combining an aqueous solution of 3 parts of tannic acid with 100 parts (calculated as solid material) of the comparative latex b.

In the case where the above-mentioned comparative paint composition 2 was applied on an iron plate, the coagulation of the latex occurred on the red rust-generated part of the surface of the iron plate, and finally, an uneven black membrane in a gloss-less state was obtained.

Moreover, in the case where the thus applied iron plate was subjected to the same water-proofness test and the same saline-proofness test as in Example 1, the growth and enlargement of red rust were observed on the part where the coagulation of the latex had occurred by red rust of the painted body.

The above-mentioned phenomenon is said to be the result of the coagulation of the latex on the above-mentioned part resulting in the reduction of the compactness of the membrane and in the deterioration of the gas-barrier property of the membrane.

## COMPARATIVE EXAMPLE 3:

To 100 parts (calculated as solid material) of the comparative latex b obtained in Comparative Example 2, 1.5 parts of a nonionic emulsifier, polyoxyethylene nonyl phenyl ether [EMULGEN 935], were added to prepare the comparative latex c containing the nonionic emulsifier.

In the case where 2 parts of tannic acid were combined with 100 parts (calculated as solid material) of the comparative latex c, the thus treated latex coagulated.

## COMPARATIVE EXAMPLE 4:

Preparation of the comparative latex d.

## The former stage

Into a glass-lined autoclave, 80 parts of de-ionized water, 0.1 part of sodium alkyl diphenyl ether disulfonate (made by NIHON NYUKAZAI Co., Ltd., under the commercial name of [NEWCOL 271A]), and 0.2 part of polyoxyethylene nonyl phenyl ether (made by KAO-ATLAS Co., Ltd., under the commercial name of [EMULGEN 935]) were introduced, and after raising the temperature of the thus introduced substances to $45°C$ of the polymerization temperature and substituting the air in the autoclave sufficiently with nitrogen gas, 8 parts of vinylidene chloride and 2 parts of methyl acrylate were introduced into the autoclave under a pressure.

In the next place, an aqueous solution of 0.01 part of potassium persulfate and an aqueous solution of 0.01 part of sodium hydrogen sulfite were introduced into the autoclave under a pressure, and the content of the autoclave was stirred for 3 hours to carry out emulsion polymerization, thereby preparing a latex.

## The latter stage

To the latex obtained in the former stage in the autoclave, 6.0 parts of an aqueous 1 % solution of sodium hydrogen sulfite were further added, and in the next place, a mixture of 72 parts of vinylidene chloride, 14 parts of ethyl acrylate and 4 parts of glycidyl methacrylate was continuously added at a uniform speed of 5 parts per hour.

At the same time, a mixture of 0.3 part of sodium alkyl diphenyl ether disulfonate [NEWCOL 271A], 0.8 part of polyoxyethylene nonyl phenyl ether [EMULGEN 935], 0.004 part of potassium persulfate and 18 parts of de-ionized water was continuously added at a uniform speed of 1 part per hour to carry out polymerization at 45°C. After about one hour of the ending of the addition of the monomers, the addition of the emulsifier and the polymerization initiator was over.

After one hour of the ending of the addition of the emulsifier and the polymerization initiator, a mixture of 0.02 part of potassium persulfate, 0.02 part of sodium hydrogen sulfite and 4.0 parts of de-ionized water was added collectively into the autoclave, and the content of the autoclave was stirred for 3 hours at 45°C to obtain the comparative latex d of pH 2.5.

In the case where one to two drops of the thus obtained latex d were dropped into each of methanol and an aqueous solution of a cationic surfactant, the latex did not coagulate, however, in the case of dropping the latex d into an aqueous solution of iron chloride, the thus treated latex d coagulated immediately. Namely, the stability of the latex d to metal ions was insufficient.

The amount of the emulsifier extracted from the latex d by the methanol extraction method was 0.63 part corresponding to 45 % by weight of the total amount of the thus used emulsifiers (1.4 parts).

According to the above-mentioned methanol extraction method, since the whole amount of sodium alkyldiphenyl ether disulfonate, which is an anionic emulsifier, was substantially extracted by methanol, all the remaining emulsifier was the nonionic emulsifier. Accordingly, the amount of the remnant nonionic emulsifier was 0.77 part, and the rate of remaining of the nonionic emulsifier was about 0.77 % by weight to the solid material of the latex d.

To 100 parts (in solid material conversion) of the latex D, 5 parts of tannin acid and 5 parts of isopropyl alcohol were added, and the thus formed mixture was gently stirred to produce the comparative anticorrosive paint composition 3.

In the case where the above-mentioned comparative anticorrosive paint composition 3 was applied on an iron plate and a zinc-plated steel plate, a black lustrous painted membrane was obtained on the iron plate as in Example 1.

However, on the thus treated zinc-plated steel, the coagulation of the latex was observed during the application of the latex with a brush, and although a painted membrane was apparently obtained, the membrane was poor in luster and compactness.

The above-mentioned facts are due to the insufficient stability of the latex to metal ions.

In the case where the thus treated iron plate and zinc-plated steel plate were subjected to the water-proofness test and the saline-proofness test similar to Example 1, no abnormality was observed on the iron plate, and the anti corrosive effect was satisfactory.

However, on the thus tested zinc-plated steel plate, the swelling of the painted membrane and the occurrence of white rust on the plate were observed. Namely, the anticorrosive effect of the comparative paint composition 3 on the zinc-plated steel plate was poor.

## COMPARATIVE EXAMPLE 5:

In the same manner as in Example 1 except for changing the nonionic emulsifier for continuous adding in the latter stage into the undermentioned one, the comparative latex e out of the present invention was produced.

### Emulsifire and polymerization initiator in the latter stage

| | |
|---|---|
| Polyoxyethylene lauryl ether [EMULGEN 147] | 2.9 parts |
| Potassium persulfate | 0.01 part |
| De-ionized water | 16.0 parts. |

Even in the case where the thus produced comparative latex e was dropped into methanol, the aqueous solution of the cationic surfactant and the aqueous solution of iron chloride, coagulation of the latex e was not observed. Namely, the chemical stability of the comparative latex e was good.

Moreover, the amount of the emulsifier extracted from the latex e by the methanol extraction method was 1.2 part corresponding to 40 % by weight of the total amount of the thus used emulsifier (3.0 parts).

Accordingly, the rate of containing the remnant nonion emulsifier was about 1.8 % by weight to the solid material of the latex e.

In the case where an aqueous solution of 2 parts of tannic acid was added to 100 parts (calculated as solid material) of the above-mentioned comparative latex e, the thus treated latex e coagulated, and accordingly, it was impossible to obtain the anticorrosive paint composition of the object.

## Claims

1. An anticorrosive paint composition comprising 100 parts by weight, calculated as solids material, of a vinylidene chloride copolymer latex and from 0.1 to 10 parts by weight of a chelating agent;
the vinylidene chloride copolymer latex being obtained by subjecting 100 parts by weight of a monomeric mixture comprising from 50 to 95 % by weight of vinylidene chloride and from 5 to 50 % by weight of a monomer which is copolymerizable therewith to emulsion polymerization in the presence of a polymerization initiator and from 0.5 to 2.0 parts by weight of a nonionic emulsifier;
wherein a preliminary emulsion polymerization is carried out with less than 20 % by weight of the total weight of the monomeric mixture, not more than 25 % by weight of the nonionic emulsifier and a proportion of the polymerization initiator, and the remaining monomeric mixture, nonionic emulsifier and polymerization initiator are subsequently continuously and uniformly added to the polymerization system to carry out emulsion polymerization of the monomeric mixture;
the vinylidene chloride copolymer latex containing the nonionic emulsifier in a form which is not extractable by the methanol extraction method (as herein defined) in an amount of at least 50 % by weight of the total amount of the nonionic emulsifier used in the polymerization and in an amount of at least 0.25 % by weight of the solids content of the vinylidene chloride copolymer latex.

2. An anticorrosive paint composition according to claim 1 wherein the chelating agent is pyrogallol or tannic acid.

3. An anticorrosive paint composition according to claim 1 or 2 comprising from 0.5 to 5 parts by weight of the chelating agent.

4. An anticorrosive paint composition according to any one of the preceding claims comprising from 1.0 to 100 parts by weight of an alcohol.

5. An anticorrosive paint composition according to claim 4 wherein the alcohol is isopropyl alcohol, ethylene glycol or propylene glycol.

6. An anticorrosive paint composition according to any one of the preceding claims wherein the monomeric mixture comprises from 70 to 90 % by weight of vinylidene chloride.

7. An anticorrosive paint composition according to any one of the preceding claims wherein the monomer copolymerizable with vinylidene chloride is vinyl chloride, methyl acrylate, ethyl acrylate, propyl acrylate, butyl acrylate, 2-ethylhexyl acrylate, octyl acrylate, methyl methacrylate, acrylonitrile, vinyl acetate, glycidyl acrylate, glycidyl methacrylate, acrylic acid, methacrylic acid, itaconic acid or 2-hydroxyethyl methacrylate.

8. An anticorrosive paint composition according to any one of the preceding claims wherein the nonionic emulsifier is a polyoxyethylene alkyl ether, a polyoxyethylene alkyl phenyl ether, a fatty acid ester of polyoxyethylene or a fatty acid ester of polyoxyethylene sorbitol.

9. A process for producing an anticorrosive paint composition which comprises mixing 100 parts by weight, calculated as solids material, of a vinylidene chloride copolymer latex and from 0.1 to 10 parts by weight of a chelating agent;
the vinylidene chloride copolymer latex being obtained by subjecting 100 parts by weight of a monomeric mixture comprising from 50 to 95 % by weight of vinylidene chloride and from 5 to 50 % by weight of a monomer which is copolymerizable therewith to emulsion polymerization in the presence of a polymerization initiator and from 0.5 to 2.0 parts by weight of a nonionic emulsifier;
wherein a preliminary emulsion polymerization is carried out with less than 20 % by weight of the total weight of the monomeric mixture, not more than 25 % by weight of the nonionic emulsifier and a proportion of the polymerization initiator, and the remaining monomeric mixture, nonionic emulsifier and polymerization initiator are subsequently continuously and uniformly added to the polymerization system to carry out emulsion polymerization of the monomeric mixture;
the vinylidene chloride copolymer latex containing the nonionic emulsifier in a form which is not extractable by the methanol extraction method (as herein defined) in an amount of at least 50 % by weight of the total amount of the nonionic emulsifier used in the polymerization and in an amount of at least 0.25 % by weight of the solids content of the vinylidene chloride copolymer latex.

10. A process according to claim 9 which further comprises applying a coating of the anticorrosive paint composition to an article.